# EUROPEAN PATENT APPLICATION

(11) **EP 4 718 802 A1**
(43) Date of publication of application: **01.04.2026**
(21) Application number: 24203683.8
(22) Date of filing: 30.09.2024
(51) Int. Cl.: H04L 41/0894, H04L 12/14, H04L 12/28, H04L 41/5025, H04L 47/12, H04L 47/11

(54) **METHOD FOR OPERATING A BROADBAND ACCESS NETWORK OF A TELECOMMUNICATIONS NETWORK, NETWORK DOMAIN OR BROADBAND ACCESS NETWORK, POLICY DECISION AND ENFORCEMENT ENTITY OR FUNCTIONALITY OR POLICY CONTROLLER ACCOUNTING ENTITY OR FUNCTIONALITY, PROGRAM AND COMPUTER-READABLE MEDIUM**

(71) Applicant: Deutsche Telekom AG, 53113 Bonn (DE); Radisys Corporation, Hillsboro, OR 97006 (US)
(72) Inventor: HAAG, Thomas, 63110 Rodgau (DE); KIND, Mario, 10119 Berlin (DE); KOLBE, Hans-Jörg, 64295 Darmstadt (DE)
(74) Representative: Schwöbel, Thilo K.

(57) **Abstract**

The invention relates to a method for operating a broadband access network of a telecommunications network, the broadband access network comprising at least one network domain,
wherein the network domain comprises, or is assigned to or has access to a control plane comprising a policy decision and enforcement entity or functionality,
wherein a specific network node of the network domain is connected such as to provide communication services to customers of the telecommunications network and receives traffic from at least one of a plurality of traffic sources as part of the broadband access network, especially as part of the network domain,
wherein, in order to realize a reliable accounting functionality despite a potential overload situation, the method comprises the following steps:
-- in a first step, the specific network node detects an overload situation and transmits an overload indication to the policy decision and enforcement entity or functionality,
-- in a second step, the policy decision and enforcement entity or functionality transmits a traffic reduction control message to the at least one of the plurality of traffic sources, the traffic reduction control message indicating to reduce traffic, or mark counting invalid, due to an overload situation.

## Description

### BACKGROUND

The present invention relates a method for operating a broadband access network of a telecommunications network, the broadband access network comprising at least one network domain, wherein the network domain comprises, or is assigned to or has access to a control plane comprising a policy decision and enforcement entity or functionality, wherein a specific network node of the network domain is connected such as to provide communication services to customers of the telecommunications network and receives traffic from at least one of a plurality of traffic sources as part of the broadband access network.

Furthermore, the present invention relates to a network domain or broadband access network of a telecommunications network comprising at least one network domain, wherein the network domain comprises, or is assigned or has access to a control plane comprising a policy decision and enforcement entity or functionality, wherein a specific network node of the network domain is connected such as to provide communication services to customers of the telecommunications network , receives traffic from at least one of a plurality of traffic sources as part of the broadband access network.

Additionally, the present invention relates to a policy decision and enforcement entity or functionality or policy controller accounting entity or functionality of a network domain or of a broadband access network.

Furthermore, the present invention relates to a program and a computer-readable medium for operating a broadband access network of a telecommunications network, network domain or broadband access network according to the inventive method.

The exchange of packetized information in broadband communication systems or telecommunications networks, both in fixed-line as in wireless communication systems (or fixed-line communication networks and mobile communication networks) has already grown dramatically and probably will also grow in the future due to the rapid spread of different data services in such communication networks.

In carrier network architectures currently under development, the network function entities in data plane and control plane, which are usually referred to as core network for mobile networks and subscriber edge for fixed line network, are typically decomposed into two layers.

The control plane (CP) functions (together called control plane functionality) are expected to be implemented as modules running on top of server virtualization technology while the user plane forwarding function (UPFF) are in many cases implemented on dedicated hardware and in some cases on standardized hardware, such as x86-based PC hardware.

In order to set up and maintain subscriber sessions, triggered by the user equipment - which can be, e.g., a smart phone or a home gateway -, a session setup is being negotiated by exchanging messages between the user equipment and the control plane entities. This session may be a fixed network session and/or a mobile network session. Inside the control plane domain, those control plane entities communicate amongst each other. As an example, a AAA entity (Authentication, Authorization and Accounting entity) or policy control systems (or entities) will be queried and backend databases might be contacted in case those databases are not implemented inside the control plane entities. Finally, control plane functions enforce their decisions on the user plane by sending requests to the user plane functionality.

In conventionally known networks, the control plane functions communicate via specific protocols on a peer-to-peer basis, e.g., via Radius protocols or Diameter protocols. This communication is peer-to-peer and requires configuring each entity with its peers and also to have a local message transport logic for the control plane messages like load balancing, resilience/redundancy and the various protocol types to be implemented inside each control plane instance.

Currently known network fabric architectures, especially leaf-spine fabric architectures, typically comprise multiple hierarchical QoS queues per access-facing port for a subscriber in order to store downlink packet data. Typically, accounting, e.g as provided or performed by the AAA entity, uses these queues to count packets and provide the counted values for billing purposes. Having multiple traffic sources connected via a fabric can lead to load conditions in which the overall amount of traffic cannot be transported simultaneously without packet loss. This may lead to miscalculated accounting results with respect to particular traffic sources because already counted packets may be discarded by the leaf due to overload.

### SUMMARY

An object of the present invention is to provide a technically simple, effective and cost effective solution for operating a broadband access network of a telecommunications network, the broadband access network comprising at least one network domain , wherein the network domain comprises, or is assigned to or has access to a control plane comprising a policy decision and enforcement entity or functionality, wherein a specific network node of the network domain is connected such as to provide communication services to customers of the telecommunications network and receives traffic from at least one of a plurality of traffic sources as part of the broadband access network, especially as part of the network domain. A further object of the present invention is to provide a corresponding network domain or broadband access network of a telecommunications network, a corresponding policy decision and enforcement entity or functionality or policy controller accounting entity or functionality of a network domain or of a broadband access network, and a corresponding program and a computer-readable medium for operating a broadband access network of a telecommunications network, network domain or broadband access network.

The object of the present invention is achieved by a method for operating a broadband access network of a telecommunications network, the broadband access network comprising at least one network domain, wherein the network domain comprises, or is assigned to or has access to a control plane comprising a policy decision and enforcement entity or functionality, wherein a specific network node of the network domain is connected such as to provide communication services to customers of the telecommunications network and receives traffic from at least one of a plurality of traffic sources as part of the broadband access network, especially as part of the network domain, wherein, in order to realize a reliable accounting functionality despite a potential overload situation, the method comprises the following steps:
-- in a first step, the specific network node detects an overload situation and transmits an overload indication to the policy decision and enforcement entity or functionality ,
-- in a second step, the policy decision and enforcement entity or functionality transmits a traffic reduction control message to the at least one of the plurality of traffic sources, the traffic reduction control message indicating to reduce traffic, or mark counting invalid, due to an overload situation.

According to the present invention, it is possible and preferred that the network domain is or corresponds to a central office point of delivery or that the network domain is associated or related to a central office point of delivery.

It is thereby advantageously possible according to the present invention to provide an accounting functionality that is more reliable and compliant to regulations concerning the counting of data packets. Furthermore, configuration efforts of the control plane entities, such as the policy decision and enforcement entity, or of the specific network node can be reduced.

In the context of the present invention, the traffic sources are called, or might be called, user plane forwarding functions or functionalities (UPFF). According to the present invention, such traffic sources (or UPFF) receive traffic reduction control messages (transmitted by the policy decision and enforcement entity or functionality according to the second step), and such traffic sources (or UPFF) also receive traffic normalization control messages (transmitted by the policy decision and enforcement entity or functionality according to the fourth step).

According to the present invention it is possible and preferred that the method furthermore comprises the following steps: in a third step, the specific network node detects a normal situation - especially the specific network node detects a normal situation again, or the absence of an overload situation after previously having detected an overload situation, and, as a result, having previously transmitted an overload indication -, and transmits a no-overload indication to the policy decision and enforcement entity or functionality, in a fourth step, the policy decision and enforcement entity or functionality transmits a traffic normalization control message to the at least one of the plurality of traffic sources, or to at least part thereof, the traffic normalization control message indicating that normal traffic conditions apply.

According to the present invention it is possible and preferred that at least one of the plurality of traffic sources or at least part thereof is or corresponds to a Service Edge (SE) or a virtual Service Edge (vSE) or a BNG function or a Multi-Service Access Node (MSAN) or an Optical Line Terminal (OLT), or, more specifically, an A10 traffic source or a SGE traffic source.

It is thereby advantageously possible according to the present invention to allow for a network node-controlled signaling of normal (or usual or average) traffic situations or conditions which represents a technically simple and effective, especially cost-effective, way of signaling normal traffic conditions.

According to the present invention, it is furthermore possible and preferred that the specific network node comprises a threshold detection and/or reporting engine, wherein both the overload situation and the normal situation, or the absence of the overload situation after a previous overload situation, is detected by the threshold detection and/or reporting engine.

It is thereby advantageously possible according to the present invention to implement the inventive method in a technically simple and effective, especially cost-effective, manner, especially when the threshold detection and /or reporting is performed by an integrated entity or functionality of the specific network node.

According to the present invention, it is furthermore possible and preferred that the control plane comprises - besides the policy decision and enforcement entity or functionality - a policy controller accounting entity or functionality, wherein especially the control plane is a distributed control plane, wherein especially, the policy decision and enforcement entity or functionality transmits: as part of the second step, an accounting stop message to the policy controller accounting entity or functionality, and/or as part of the fourth step, an accounting re-start message to the policy controller accounting entity or functionality, wherein especially the overload indication and/or the traffic reduction control message and/or the accounting stop message and/or the no-overload indication and/or the traffic normalization control message and/or the accounting re-start message are user-specific indications or messages, and/or user group-specific indications or messages, and/or user category-specific indications or messages, and/or traffic category-specific indications or messages.

According to the present invention, it is also possible and preferred that the transmitted accounting stop message is or corresponds to a flag or flag information or flag notification.

According to the present invention, the accounting by the policy controller accounting entity or functionality and/or the specific network node is performed in order to generate or create a bill for a wholesale partner.

According to the present invention, it is as well possible and preferred that the policy controller accounting entity or functionality and/or the specific network node comprise at least one counter and that the indication of an overload results in stopping the at least one counter to avoid false counting results (or accounting results) and declare a, especially previously started, period as non valid for counting or accounting.

It is thereby advantageously possible according to the present invention to implement the inventive method in a technically simple and effective, especially cost-effective manner, especially because sending an accounting stop message as part of the second step allows for stopping the accounting upon detection of an overload situation.

It is furthermore especially advantageous according to the present invention that the messages or indications (i.e. the overload indication and/or the traffic reduction control message and/or the accounting stop message and/or the no-overload indication and/or the traffic normalization control message and/or the accounting re-start message) are specifically targeted to specific portions of the overall traffic to be handled by the broadband access network and/or by the telecommunications network and/or by the central office point of delivery or network domain. In other words, this is to say that such messages or indications, respectively, have (or at least could have) their, respective, scope of validity, which, of course, also means that - outside of such scope of validity - the respective message or indication is not applicable or valid. This advantageously provides the possibility, according to the present invention, to be able to realize - by means of the mentioned messages or indications - a comparatively fine granularity regarding the control of the information or data that are underpinning the accounting process within thhe telecommunications network, or at least part thereof.
According to the present invention, the target (or the scope of validity) of such messages or indications might be user-related (i.e. dependent on which user and/or which user group and/or which user cagegory is actually concerned), but it is also possible to target different traffic categories like best-effort traffic or guaranteed traffic or the like.
Of course, it is also possible and preferred according to the present invention that messages or indications are defined such as to refer to combinations of such different targets (or scopes of validity of such messages or indications that are defined not only in a user-related way, but, additionally, in a traffic-related manner).

According to the present invention, it is furthermore possible and preferred that upon reception of the traffic reduction control message from the policy decision and enforcement entity or functionality, the at least one of the plurality of traffic sources, especially by means of, respectively, a policy enforcement point thereof: throttle the respective downstream traffic, or traffic volume per time, especially in order to stop the overload situation, and/or discard accounting data while the overload situation is indicated, wherein especially, upon reception of the traffic normalization control message from the policy decision and enforcement entity or functionality, the at least one of the plurality of traffic sources, or at least part thereof, apply - or each of the traffic sources that receives the traffic normalization control message applies - the normal downstream traffic, or traffic volume per time, wherein especially, the normal downstream traffic, or traffic volume per time, is gradually applied, especially by means of applying a hysteresis behavior in order to avoid an oscillation between overload and no-overload situations.

According to the present invention, it is possible and preferred that the at least one of the plurality of traffic sources is connected to the specific network node, wherein the specific network node is also connected to one or a plurality of service creation points and that transmitting the traffic reduction control message results in one or a plurality of the service creation points - being connected to that specific network node - to throttle down the traffic, and, thereby, avoiding overload.

According to the present invention, it is possible and preferred that the at least one of the plurality of traffic sources is or corresponds to a vBNG shaper or is associated or connected to a vBNG shaper.

According to the present invention, it is possible and preferred that the specific network node serves or provides service to one or a plurality of subscribers and that it comprises one or a plurality of schedulers per subscriber or one or a plurality of counters per subscriber.

According to the present invention, it is possible and preferred that the hysteresis behaviour is realized by means of a control loop.

According to the present invention, it is possible and preferred that the traffic source, especially a Service Edge, indicates to other control systems which subscribers are or were affected by stopping the accounting.

It is thereby advantageously possible according to the present invention to implement the inventive method in a technically simple and effective, especially cost-effective manner, especially because throttling the downstream traffic in an overload situation - that requires constrained or deactivated accounting - helps to reestablish a normal traffic situation which allows to resume accurate accounting.

According to the present invention, it is furthermore possible and preferred that the network domain comprises a network domain bus functionality or service based inter-function communication system, wherein both the overload indication and the no-overload indication, transmitted by the specific network node, are transmitted using the network domain bus functionality or service based inter-function communication system and/or wherein both the traffic reduction control message and the traffic normalization control message, transmitted by the policy decision and enforcement entity or functionality, are transmitted using the network domain bus functionality or service based inter-function communication system, wherein especially also the accounting stop message and the accounting re-start message, transmitted by the policy decision and enforcement entity or functionality, are transmitted using the network domain bus functionality or service based inter-function communication system.

According to the present invention, it is possible and preferred that the traffic network domain bus functionality or service based inter-function communication system corresponds to or is embedded in or part of a distributed control plane.

It is thereby advantageously possible according to the present invention to implement the inventive method in a technically simple and effective, especially cost-effective manner, especially because bus communication allows for an exchange of the overload indication and the no-overload indication, the traffic reduction control message and the traffic normalization control message as well as the accounting stop message and the accounting re-start message in a coordinated manner using, at least partly, the same infrastructural means (such as a shared data transmission line) for communication.

According to the present invention, it is furthermore possible and preferred that the overload indication, received by the policy decision and enforcement entity or functionality, and/or the accounting stop message, received by the policy controller accounting entity or functionality, results in stopping all related accounting counters and/or results in declaring the subsequent period as non valid for accounting in order to avoid false accounting results.

According to the present invention, it is furthermore possible and preferred that the no-overload indication, received by the policy decision and enforcement entity or functionality, and/or the accounting re-start message, received by the policy controller accounting entity or functionality, results in restarting all related accounting counters and/or results in declaring the subsequent period as valid for accounting.

It is thereby advantageously possible according to the present invention to implement the inventive method in a technically simple and effective, especially cost-effective manner, especially because stopping all related accounting counters upon the occurrence of decisive events, such as the overload indication or the accounting stop message helps to ensure that accounting is always performed or executed according to applicable regulations.

According to the present invention, it is furthermore possible and preferred that the network domain comprises a plurality of leaf network nodes of a spine-leaf architecture, wherein especially the specific network node, corresponds to a leaf network node, wherein the specific network node is connected to one or a plurality of line termination or access nodes to provide communication services to customers of the telecommunications network and/or a line termination or access node, wherein the specific network node provides communication services to customers of the telecommunications network.

According to the present invention, it is furthermore possible and preferred that the overload indication includes information on which traffic type or type of customer is affected by the overload.

According to the present invention, it is furthermore possible and preferred that the leaf network node comprises a single interface or a group of interfaces or, more specifically, a Link Aggregation Group (LAG) interface.

According to the present invention, it is possible and preferred that the overload indication is generated by an aggregation switch or an access node.

According to the present invention, it is possible and preferred that the policy decision and enforcement entity or functionality and/or the policy controller accounting entity or functionality and/or the specific network node, especially the leaf network node, are configured to only operate or perform according to the inventive method if a particular kind of subscriber, e.g. a residential subscriber, is connected to the specific network node while they do not operate or perform according to the inventive method if an enterprise subscriber or wholesale subscriber is connected to the specific network node.

It is thereby advantageously possible according to the present invention to implement the inventive method in a technically simple and effective, especially cost-effective manner, especially because a spine-leaf architecture, i.e. a 2-tier architecture, is well suited to efficiently handle packet transmissions that would otherwise need to hop between multiple core nodes (east-west traffic). As a result, a higher network performance as well as higher scalability and expandability (with respect to spine and leaf nodes) is achieved.

Furthermore, the present invention relates to a network domain or broadband access network of a telecommunications network comprising at least one network domain, wherein the network domain comprises, or is assigned or has access to a control plane comprising a policy decision and enforcement entity or functionality, wherein a specific network node of the network domain is connected such as to provide communication services to customers of the telecommunications network, receives traffic from at least one of a plurality of traffic sources as part of the broadband access network, especially as part of the network domain, wherein, in order to realize a reliable accounting functionality despite a potential overload situation, the broadband access network, especially the network domain, is configured such that: the specific network node detects an overload situation and transmits an overload indication to the policy decision and enforcement entity or functionality, the policy decision and enforcement entity or functionality transmits a traffic reduction control message to the plurality of traffic sources, the traffic reduction control message indicating to reduce traffic, or mark counting invalid, due to an overload situation.

According to the present invention, it is possible and preferred that the network domain is or corresponds to a central office point of delivery or that the network domain is associated or related to a central office point of delivery.

Furthermore, the present invention relates to a policy decision and enforcement entity or functionality or policy controller accounting entity or functionality of a network domain or of a broadband access network, especially a network domain, or of a broadband access network according to the invention.

Still additionally, the present invention relates to a program comprising a computer readable program code which, when executed on a computer and/or on a network node of the network domain and/or on a traffic source of the network domain and/or on a policy decision and enforcement entity or functionality and/or on a policy controller accounting entity or functionality, or in part on a network node and/or in part on a traffic source and/or in part on a policy decision and enforcement entity or functionality and/or in part on a policy controller accounting entity or functionality , causes the computer and/or the network node and/or the traffic source and/or the policy decision and enforcement entity or functionality and/or the policy controller accounting entity or functionality to perform the inventive method.

Furthermore, the present invention relates to a computer-readable medium comprising instructions which when executed on a computer and/or on a network node of the network domain and/or on a traffic source of the network domain and/or on a policy decision and enforcement entity or functionality and/or on a policy controller accounting entity or functionality, or in part on a network node and/or in part on a traffic source and/or in part on a policy decision and enforcement entity or functionality and/or in part on a policy controller accounting entity or functionality, causes the computer and/or the network node and/or the traffic source and/or the policy decision and enforcement entity or functionality and/or the policy controller accounting entity or functionality to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network according to the present invention, having a broadband access network with a central office point of delivery/network domain.
Figure 2 schematically shows in greater detail the central office point of delivery (or network domain) comprising a certain number of components, entities and/or network nodes, as well as further entities and/or network nodes being connected to the central office point of delivery/network domain.
Figure 3 schematically illustrates the information flow of messages and indication according to the present invention within the central office point of delivery/network domain.
Figure 4 schematically illustrates a central office point of delivery (or network domain) that is implemented in a spine-leaf architecture and that is using a distributed policy enforcement as well as detailed examples of different types of specific network nodes and traffic sources.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

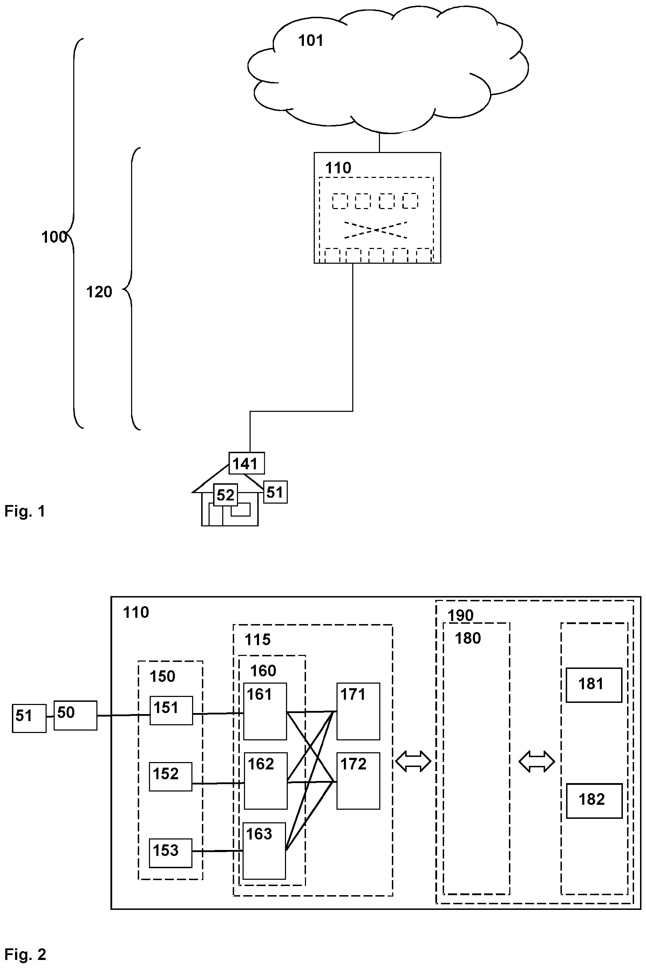

In Figure 1, a telecommunications network 100 according to the present invention is schematically shown, having - preferably - at least a fixed line part. A mobile (or cellular) part might be present as well, as part of the telecommunications network 100, but is not specifically illustrated in Figure 1. User equipments or client devices 51, 52 are connected to the telecommunications network 100 by means of a (broadband) access network 120. The telecommunications network 100 comprises, especially as part of the broadband access network 120, at least one logical or physical central office point of delivery (hereinafter also called network domain) 110 that is preferably realized within a (mini) data center and that is especially handling different access requirements, especially different access possibilities, of the client devices 51, 52 to network functionalities provided by the telecommunications network 100 or via the telecommunications network 100. In addition, the telecommunications network 100 typically also comprises - besides the broadband access network 120 - a core network 101. The client devices 51, 52 are typically connected to the logical or physical central office point of delivery (or network domain) 110 by means of a customer premises equipment device 50 or by means of a customer premises equipment entity or functionality that might be built into or realized by the client devices 51, 52. Preferably, the central office point of delivery 110 comprises a switching fabric 115 having a spine-leaf architecture, i.e. typically comprising a plurality of spine network nodes and typically also a plurality of leaf network nodes which are not explicitly represented in Figure 1.

Figure 2 schematically illustrates a central office point of delivery (or network domain) 110 as part of a broadband access network 120 of a telecommunications network 100. In the exemplary embodiment shown in Figure 2, the represented part of the telecommunications network 100 (or the central office point of delivery 110) comprises, especially as part of a control functionality or control plane 190, a central office point of delivery bus functionality or service based inter-function communication system 180, a policy decision and enforcement entity or functionality 181 and a policy controller accounting entity or functionality 182. Furthermore, the central office point of delivery 110 comprises typically and preferably (but not necessarily) a plurality of access nodes 151, 152, 153 (or also called line termination nodes 151, 152, 153) as part of an access functionality 150. In the example represented in Figure 2, the broadband access network 120 comprises three access nodes, a first access node 151, a second access node 152, and a third access node 153. The access nodes 151, 152, 153 might be provided to support different access technologies to the respective customer premises equipment entities or functionalities (of which only customer premises equipment entity or functionality 50 is schematically shown in Figure 2); the customer premises equipment entity or functionality 50 might also be called a home gateway or a cable modem or an integrated access device 50. Hence, a client device 51 (or a plurality of client devices which are not specifically represented in Figure 2) is (or are) connected to the telecommunications network 100 (especially to the first access node 151) via the customer premises equipment entity or functionality 50. The functionality of the client device 51 and the functionality of the customer premises equipment entity or functionality 50 (or home gateway device 50) might be integrated in one device or "box". Nevertheless, these functionalities are represented in Figure 2 as separated functionalities. In Figure 2, only one customer premises equipment 50, and only one client device 51 are shown. However, also the second and/or third access nodes 152, 153 typically provide network access to end users or customers by means of respective customer premises equipment devices or integrated access devices (not shown in Figure 2).

In the exemplary embodiment of the central office point of delivery (or network domain) 110 shown in Figure 2, the central office point of delivery 110 comprises a switching fabric 115 as a transport functionality or service 115 within the central office point of delivery 110. The switching fabric 115 (or transport functionality or service 115) comprises a plurality of spine network nodes 171, 172 and a plurality of leaf network nodes 161, 162, 163, the leaf network nodes 161, 162, 163 (i.e., according to the exemplary embodiment shown in Figure 2, a first leaf network node 161, a second leaf network node 162, and a third leaf network node 163 - collectively referred to as leaf network nodes 160). Such leaf network nodes 160 are especially providing the edge functionality or service edge (functionality) within the central office point of delivery 110 or network domain 110.

Hence, the access nodes 151, 152, 153 are serving or being related to one or a plurality of end users or subscribers (and the corresponding customer premises equipment devices or entities or functionalities and client devices) of the telecommunications network 100; for the sake of simplicity, Figure 2 only shows one customer premises equipment entity or functionality 50 and one client device 51, being connected to the first access node 151 of the central office point of delivery 110.

According to the present invention, typically, the functionality of each one (leaf network node) of the leaf network nodes 160 might be differentiated, at least in part: One of the leaf network nodes 160 (i.e. one such leaf node) might, either, - rather, or at least predominantly - be realizing a forwarding functionality, especially to forward (predominantly) downlink traffic towards the respective users connected to such considered leaf network node, i.e. to the respective access node or nodes 151, 152, 153. Alternatively, a considered one of the leaf network nodes 160 (i.e. one such leaf node) might also (at least predominantly) function as a data source (or as user plane forwarding function, UPFF) - e.g. for a specific type of data or a specific type of traffic.
For the sake of simplicity, this differentiation or this possible differentiation (among leaf network nodes 161, 162, 163) is not explicitly shown or represented in Figure 2; however Figure 2 should be understood such that - as part of the leaf network nodes 160 - at least one thereof shall also have, or realize, the functionality of a data source or of a user plane forwarding function UPFF.

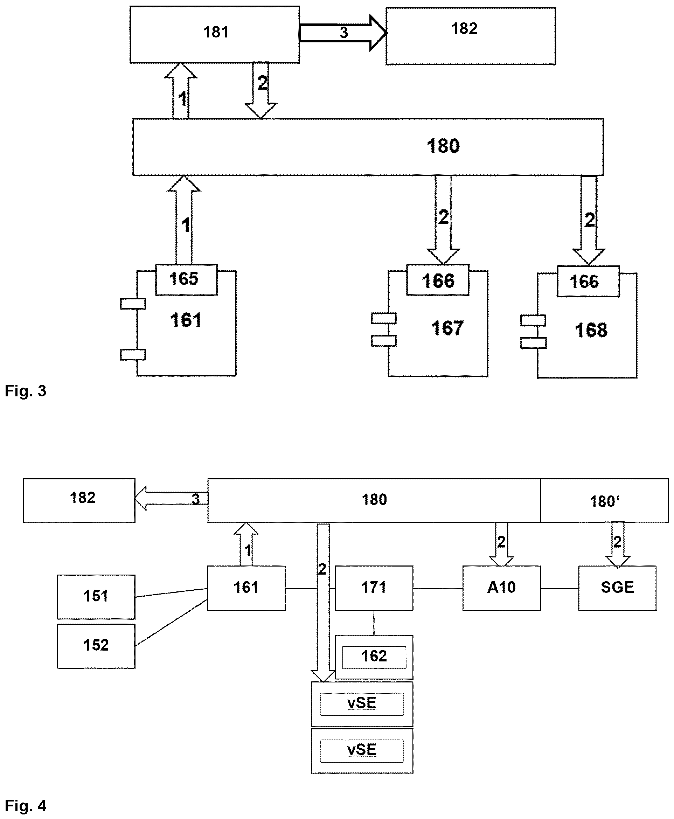

Figure 3 schematically illustrates the information flow of messages and indications according to the present invention within the central office point of delivery (or network domain) 110. Following the detection of exceeding traffic by a threshold detection and/or reporting engine 165, a network domain bus functionality 180 is utilized to transmit an overload indication 1 from the specific network node 161 to the policy decision and enforcement entity or functionality 181. Subsequently, the policy decision and enforcement entity or functionality 181 transmits an accounting stop message 3 to a policy controller accounting entity or functionality 182. As a consequence, the policy decision and enforcement entity or functionality 181 transmits a traffic reduction control message 2, again utilizing the network domain bus functionality 180, to at least one of the plurality of traffic sources 167, 168 (corresponding to leaf network nodes 161, 162, 163 as shown in Figure 2). The traffic reduction control message 2 indicates to reduce traffic, or mark counting invalid, due to an overload situation and the respective exceeding traffic, or traffic volume per time, is throttled by means of a policy enforcement point 166. In the context of the present invention, a traffic source 167, 168 may be connected to any network element or switching element in the central office point of delivery or network domain 110.

Figure 4 schematically illustrates a central office point of delivery (or network domain) 110 that is implemented in a spine-leaf architecture and that is using a distributed policy enforcement as well as detailed examples of different types of specific network nodes 151, 161 and traffic sources 167, 168. The schematically illustrated central office point of delivery 110 deviates from the one shown in figure 2 in the following ways: The specific network nodes 161, 162 correspond to leaf network nodes which are both connected to a spine node 171. The leaf network node 161 is connected to two line terminations or access nodes 151, 152, while leaf network node 162 is connected to two virtual Service Edges, vSE, (being a particular embodiment of and example for traffic sources 167, 168). Furthermore, an A10 traffic source is connected to the spine leaf 171 and a SGE traffic source is connected to the A10 traffic source. The overload indication 1, the traffic reduction control message 2 as well as the accounting stop message 3 are either transmitted via the network domain bus functionality 180 or - in case of the traffic reduction control message 2 for the SGE traffic source - via an extension 180' of the network domain bus functionality 180.

## Claims

1. Method for operating a broadband access network (120) of a telecommunications network (100), the broadband access network (120) comprising at least one network domain (110), wherein the network domain (110) comprises, or is assigned to or has access to a control plane (190) comprising a policy decision and enforcement entity or functionality (181), wherein a specific network node (161, 151) of the network domain (110) is connected such as to provide communication services to customers of the telecommunications network (100) and receives traffic from at least one of a plurality of traffic sources (167, 168) as part of the broadband access network (120), especially as part of the network domain (110),
wherein, in order to realize a reliable accounting functionality despite a potential overload situation, the method comprises the following steps:
-- in a first step, the specific network node (161, 151) detects an overload situation and transmits an overload indication (1) to the policy decision and enforcement entity or functionality (181),
-- in a second step, the policy decision and enforcement entity or functionality (181) transmits a traffic reduction control message (2) to the at least one of the plurality of traffic sources (167, 168), the traffic reduction control message (2) indicating to reduce traffic, or mark counting invalid, due to an overload situation.

2. Method according to claim 1, wherein the method furthermore comprises the following steps:
-- in a third step, the specific network node (161, 151) detects a normal situation
- especially the specific network node (161, 151) detects a normal situation again, or the absence of an overload situation after previously having detected an overload situation, and, as a result, having previously transmitted an overload indication -, and transmits a no-overload indication to the policy decision and enforcement entity or functionality (181),
-- in a fourth step, the policy decision and enforcement entity or functionality (181) transmits a traffic normalization control message to the at least one of the plurality of traffic sources (167, 168), or to at least part thereof, the traffic normalization control message indicating that normal traffic conditions apply.

3. Method according one of the preceding claims, wherein the specific network node (161, 151) comprises a threshold detection and/or reporting engine (165), wherein both the overload situation and the normal situation, or the absence of the overload situation after a previous overload situation, is detected by the threshold detection and/or reporting engine (165).

4. Method according one of the preceding claims, wherein the control plane (190) comprises - besides the policy decision and enforcement entity or functionality (181) - a policy controller accounting entity or functionality (182),
wherein especially the control plane (190) is a distributed control plane,
wherein especially, the policy decision and enforcement entity or functionality (181) transmits:
-- as part of the second step, an accounting stop message (3) to the policy controller accounting entity or functionality (182), and/or
-- as part of the fourth step, an accounting re-start message to the policy controller accounting entity or functionality (182),
wherein especially the overload indication (1) and/or the traffic reduction control message (2) and/or the accounting stop message and/or the no-overload indication and/or the traffic normalization control message and/or the accounting re-start message are
-- user-specific indications or messages, and/or
-- user group-specific indications or messages, and/or
-- user category-specific indications or messages, and/or
-- traffic category-specific indications or messages.

5. Method according one of the preceding claims, wherein, upon reception of the traffic reduction control message from the policy decision and enforcement entity or functionality (181), the at least one of the plurality of traffic sources (167, 168), especially by means of, respectively, a policy enforcement point (166) thereof:
-- throttle the respective downstream traffic, or traffic volume per time, especially in order to stop the overload situation, and/or
-- discard accounting data while the overload situation is indicated or mark them as being invalid,
wherein especially, upon reception of the traffic normalization control message from the policy decision and enforcement entity or functionality (181), the at least one of the plurality of traffic sources (167, 168), or at least part thereof, apply - or each of the traffic sources (167, 168) that receives the traffic normalization control message applies - the normal downstream traffic, or traffic volume per time, wherein especially, the normal downstream traffic, or traffic volume per time, is gradually applied, especially by means of applying a hysteresis behavior in order to avoid an oscillation between overload and no-overload situations.

6. Method according one of the preceding claims, wherein the network domain (110) comprises a network domain bus functionality or service based inter-function communication system (180), wherein both the overload indication and the no-overload indication, transmitted by the specific network node (161, 151), are transmitted using the network domain bus functionality or service based inter-function communication system (180) and/or wherein both the traffic reduction control message and the traffic normalization control message, transmitted by the policy decision and enforcement entity or functionality (181), are transmitted using the network domain bus functionality or service based inter-function communication system (180), wherein especially also the accounting stop message and the accounting re-start message, transmitted by the policy decision and enforcement entity or functionality (181), are transmitted using the network domain bus functionality or service based inter-function communication system (180).

7. Method according one of the preceding claims, wherein the overload indication, received by the policy decision and enforcement entity or functionality (181), and/or the accounting stop message, received by the policy controller accounting entity or functionality (182), results in stopping all related accounting counters and/or results in declaring the subsequent period as non valid for accounting in order to avoid false accounting results, and/or
wherein the no-overload indication, received by the policy decision and enforcement entity or functionality (181), and/or the accounting re-start message, received by the policy controller accounting entity or functionality (182), results in restarting all related accounting counters and/or results in declaring the subsequent period as valid for accounting.

8. Method according one of the preceding claims, wherein the network domain (110) comprising a plurality of leaf network nodes (160) of a spine-leaf architecture, wherein especially the specific network node (161, 151), corresponds to:
-- a leaf network node (161), wherein the specific network node (161, 151) is connected to one or a plurality of line termination or access nodes (151, 152) to provide communication services to customers of the telecommunications network (100) and/or
-- a line termination or access node (151, 152), wherein the specific network node (161, 151) provides communication services to customers of the telecommunications network (100).

9. Network domain (110) or broadband access network (120) of a telecommunications network (100) comprising at least one network domain (110),
wherein the network domain (110) comprises, or is assigned or has access to a control plane (190) comprising a policy decision and enforcement entity or functionality (181),
wherein a specific network node (161, 151) of the network domain (110) is connected such as to provide communication services to customers of the telecommunications network (100), receives traffic from at least one of a plurality of traffic sources (167, 168) as part of the broadband access network (120), especially as part of the network domain (110),
wherein, in order to realize a reliable accounting functionality despite a potential overload situation, the broadband access network (120), especially the network domain (110), is configured such that:
-- the specific network node (161, 151) detects an overload situation and transmits an overload indication (1) to the policy decision and enforcement entity or functionality (181),
-- the policy decision and enforcement entity or functionality (181) transmits a traffic reduction control message (2) to the plurality of traffic sources (167, 168), the traffic reduction control message (2) indicating to reduce traffic, or mark counting invalid, due to an overload situation.

10. Policy decision and enforcement entity or functionality (181) or policy controller accounting entity or functionality (182) of a network domain (110) or of a broadband access network (120), especially according to claim 9.

11. Program comprising a computer readable program code which, when executed on a computer and/or on a network node (161, 151) of the network domain (110) and/or on a traffic source (167, 168) of the network domain (110) and/or on a policy decision and enforcement entity or functionality (181) and/or on a policy controller accounting entity or functionality (182), or in part on a network node (161, 151) and/or in part on a traffic source (167, 168) and/or in part on a policy decision and enforcement entity or functionality (181) and/or in part on a policy controller accounting entity or functionality (182), causes the computer and/or the network node (161, 151) and/or the traffic source (167, 168) and/or the policy decision and enforcement entity or functionality (181) and/or the policy controller accounting entity or functionality (182) to perform a method according one of claims 1 to 8.

12. Computer-readable medium comprising instructions which when executed on a computer and/or on a network node (161, 151) of the network domain (110) and/or on a traffic source (167, 168) of the network domain (110) and/or on a policy decision and enforcement entity or functionality (181) and/or on a policy controller accounting entity or functionality (182), or in part on a network node (161, 151) and/or in part on a traffic source (167, 168) and/or in part on a policy decision and enforcement entity or functionality (181) and/or in part on a policy controller accounting entity or functionality (182), causes the computer and/or the network node (161, 151) and/or the traffic source (167, 168) and/or the policy decision and enforcement entity or functionality (181) and/or the policy controller accounting entity or functionality (182) to perform a method according one of claims 1 to 8.

## Amended claims

### Amended claims in accordance with Rule 137(2) EPC.

1. Method for realizing a reliable accounting functionality despite a potential overload situation in a broadband access network (120) of a telecommunications network (100), the broadband access network (120) comprising at least one network domain (110), wherein the network domain (110) comprises, or is assigned to or has access to a control plane (190) comprising a policy decision and enforcement entity or functionality (181), wherein a specific network node (161, 151) of the network domain (110) is connected such as to provide communication services to customers of the telecommunications network (100) and receives traffic from at least one of a plurality of traffic sources (167, 168) as part of the broadband access network (120), especially as part of the network domain (110),
**characterized in that** the method comprises the following steps:
-- in a first step, the specific network node (161, 151) detects an overload situation and transmits an overload indication (1) to the policy decision and enforcement entity or functionality (181),
-- in a second step, the policy decision and enforcement entity or functionality (181) transmits a traffic reduction control message (2) to the at least one of the plurality of traffic sources (167, 168), the traffic reduction control message (2) indicating to reduce traffic, or mark counting invalid, due to an overload situation, wherein, upon reception of the traffic reduction control message from the policy decision and enforcement entity or functionality (181), the at least one of the plurality of traffic sources (167, 168):
-- throttle the respective downstream traffic, or traffic volume per time, especially in order to stop the overload situation, and/or
-- discard accounting data while the overload situation is indicated or mark them as being invalid,
wherein the network domain (110) comprises a plurality of leaf network nodes (160) of a spine-leaf architecture,
wherein the specific network node (161, 151), corresponds to:
-- a leaf network node (161), wherein the specific network node (161, 151) is connected to one or a plurality of line termination or access nodes (151, 152) to provide communication services to customers of the telecommunications network (100) and/or
-- a line termination or access node (151, 152), wherein the specific network node (161, 151) provides communication services to customers of the telecommunications network (100).

2. Method according to claim 1, wherein the method furthermore comprises the following steps:
-- in a third step, the specific network node (161, 151) detects a normal situation - especially the specific network node (161, 151) detects a normal situation again, or the absence of an overload situation after previously having detected an overload situation, and, as a result, having previously transmitted an overload indication -, and transmits a no-overload indication to the policy decision and enforcement entity or functionality (181),
-- in a fourth step, the policy decision and enforcement entity or functionality (181) transmits a traffic normalization control message to the at least one of the plurality of traffic sources (167, 168), or to at least part thereof, the traffic normalization control message indicating that normal traffic conditions apply.

3. Method according to claim 2, wherein the specific network node (161, 151) comprises a threshold detection and/or reporting engine (165), wherein both the overload situation and the normal situation, or the absence of the overload situation after a previous overload situation, is detected by the threshold detection and/or reporting engine (165).

4. Method according to claim 2 and one of the other preceding claims, wherein the control plane (190) comprises - besides the policy decision and enforcement entity or functionality (181) - a policy controller accounting entity or functionality (182),
wherein especially the control plane (190) is a distributed control plane,
wherein, the policy decision and enforcement entity or functionality (181) transmits:
-- as part of the second step, an accounting stop message (3) to the policy controller accounting entity or functionality (182), and/or
-- as part of the fourth step, an accounting re-start message to the policy controller accounting entity or functionality (182),
wherein the overload indication (1) and/or the traffic reduction control message (2) and/or the accounting stop message and/or the no-overload indication and/or the traffic normalization control message and/or the accounting re-start message are
-- user-specific indications or messages, and/or
-- user group-specific indications or messages, and/or
-- user category-specific indications or messages, and/or
-- traffic category-specific indications or messages.

5. Method according to claim 2 and one of the other preceding claims, wherein, upon reception of the traffic reduction control message from the policy decision and enforcement entity or functionality (181), the at least one of the plurality of traffic sources (167, 168), by means of, respectively, a policy enforcement point (166) thereof:
-- throttle the respective downstream traffic, or traffic volume per time, especially in order to stop the overload situation, and/or
-- discard accounting data while the overload situation is indicated or mark them as being invalid,
wherein especially, upon reception of the traffic normalization control message from the policy decision and enforcement entity or functionality (181), the at least one of the plurality of traffic sources (167, 168), or at least part thereof, apply - or each of the traffic sources (167, 168) that receives the traffic normalization control message applies - the normal downstream traffic, or traffic volume per time,
wherein especially, the normal downstream traffic, or traffic volume per time, is gradually applied, especially by means of applying a hysteresis behavior in order to avoid an oscillation between overload and no-overload situations.

6. Method according to claim 2 and one of the other preceding claims, wherein the network domain (110) comprises a network domain bus functionality or service based inter-function communication system (180), wherein both the overload indication and the no-overload indication, transmitted by the specific network node (161, 151), are transmitted using the network domain bus functionality or service based inter-function communication system (180) and/or wherein both the traffic reduction control message and the traffic normalization control message, transmitted by the policy decision and enforcement entity or functionality (181), are transmitted using the network domain bus functionality or service based inter-function communication system (180), wherein also the accounting stop message and the accounting re-start message, transmitted by the policy decision and enforcement entity or functionality (181), are transmitted using the network domain bus functionality or service based inter-function communication system (180).

7. Method according to claims 2 and 4 and one of the other preceding claims, wherein the overload indication, received by the policy decision and enforcement entity or functionality (181), and/or the accounting stop message, received by the policy controller accounting entity or functionality (182), results in stopping all related accounting counters and/or results in declaring the subsequent period as non valid for accounting in order to avoid false accounting results, and/or wherein the no-overload indication, received by the policy decision and enforcement entity or functionality (181), and/or the accounting re-start message, received by the policy controller accounting entity or functionality (182), results in restarting all related accounting counters and/or results in declaring the subsequent period as valid for accounting.

8. Policy decision and enforcement entity or functionality (181) or policy controller accounting entity or functionality (182) of a network domain (110) or of a broadband access network (120) of a telecommunications network (100) comprising at least one network domain (110), wherein the network domain (110) comprises a control plane (190) comprising a policy decision and enforcement entity or functionality (181), wherein a specific network node (161, 151) of the network domain (110) is connected such as to provide communication services to customers of the telecommunications network (100), receives traffic from at least one of a plurality of traffic sources (167, 168) as part of the broadband access network (120), especially as part of the network domain (110),
**characterized in that**, in order to realize a reliable accounting functionality despite a potential overload situation, the broadband access network (120), especially the network domain (110), is configured such that:
-- the specific network node (161, 151) detects an overload situation and transmits an overload indication (1) to the policy decision and enforcement entity or functionality (181),
-- the policy decision and enforcement entity or functionality (181) transmits a traffic reduction control message (2) to the plurality of traffic sources (167, 168), the traffic reduction control message (2) indicating to reduce traffic, or mark counting invalid, due to an overload situation, wherein, upon reception of the traffic reduction control message from the policy decision and enforcement entity or functionality (181), the at least one of the plurality of traffic sources (167, 168):
-- throttle the respective downstream traffic, or traffic volume per time, especially in order to stop the overload situation, and/or
-- discard accounting data while the overload situation is indicated or mark them as being invalid,
wherein the network domain (110) comprises a plurality of leaf network nodes (160) of a spine-leaf architecture,
wherein the specific network node (161, 151), corresponds to:
-- a leaf network node (161), wherein the specific network node (161, 151) is connected to one or a plurality of line termination or access nodes (151, 152) to provide communication services to customers of the telecommunications network (100) and/or
-- a line termination or access node (151, 152), wherein the specific network node (161, 151) provides communication services to customers of the telecommunications network (100)..

9. A computer program comprising a computer readable program code which, when executed on a computer and/or on a network node (161, 151) of the network domain (110) and/or on a traffic source (167, 168) of the network domain (110) and/or on a policy decision and enforcement entity or functionality (181) and/or on a policy controller accounting entity or functionality (182), or in part on a network node (161, 151) and/or in part on a traffic source (167, 168) and/or in part on a policy decision and enforcement entity or functionality (181) and/or in part on a policy controller accounting entity or functionality (182), causes the computer and/or the network node (161, 151) and/or the traffic source (167, 168) and/or the policy decision and enforcement entity or functionality (181) and/or the policy controller accounting entity or functionality (182) to perform a method according one of claims 1 to 7.

10. Computer-readable medium comprising instructions which when executed on a computer and/or on a network node (161, 151) of the network domain (110) and/or on a traffic source (167, 168) of the network domain (110) and/or on a policy decision and enforcement entity or functionality (181) and/or on a policy controller accounting entity or functionality (182), or in part on a network node (161, 151) and/or in part on a traffic source (167, 168) and/or in part on a policy decision and enforcement entity or functionality (181) and/or in part on a policy controller accounting entity or functionality (182), causes the computer and/or the network node (161, 151) and/or the traffic source (167, 168) and/or the policy decision and enforcement entity or functionality (181) and/or the policy controller accounting entity or functionality (182) to perform a method according one of claims 1 to 7.
